Europäisches Patentamt

European Patent Office

Office européen des brevets

(19)

(11) Veröffentlichungsnummer: **0 294 503**
**B1**

(12) **EUROPÄISCHE PATENTSCHRIFT**

(45) Veröffentlichungstag der Patentschrift:
**03.01.90**

(21) Anmeldenummer: 87108366.3

(22) Anmeldetag: **10.06.87**

(51) Int. Cl.⁴: **H05B 6/64,** C04B 41/88,
C04B 41/80, C03C 8/14,
C03C 8/18, C03C 8/04

(54) Verwendung einer edelmetallhaltigen Paste zur Herstellung von Bräunungsgeschirr für Mikrowellenöfen.

(43) Veröffentlichungstag der Anmeldung:
**14.12.88 Patentblatt 88/50**

(45) Bekanntmachung des Hinweises auf die Patenterteilung:
**03.01.90 Patentblatt 90/1**

(84) Benannte Vertragsstaaten:
**AT BE CH DE ES FR GB GR IT LI LU NL SE**

(56) Entgegenhaltungen:
**EP-A- 0 215 708**
**EP-A- 0 247 922**
**FR-A- 2 382 878**
**GB-A- 2 104 058**
**US-A- 2 739 901**
**US-A- 3 922 452**

(73) Patentinhaber: **Degussa Aktiengesellschaft,**
**Weissfrauenstrasse 9, D-6000 Frankfurt am Main 1(DE)**

(72) Erfinder: **Roche, Guy, Dr., Chemin de Gigondas,**
**F-87170 Isle(FR)**
Erfinder: **Labregere, Gérard, 6 rue Jean Rebier,**
**F-87170 Isle(FR)**

ACTORUM AG

**Beschreibung**

Die Erfindung betrifft die Verwendung von aus der Mikroelektronik bekannten edelmetallhaltigen Pasten zur Herstellung von Metall- bzw. Metallegierungsschichten auf Bräunungsgeschirren aus Glas, Keramik oder Glaskeramik für Mikrowellenöfen.

In Mikrowellenöfen werden Speisen dadurch gegart, daß die Mikrowellen von allen Seiten in die Lebensmittel eindringen und die Moleküle in Schwingungen versetzen (Wärmeschwingungen). Als Garungsgeschirr sind deshalb nur Materialien einsetzbar, die für Mikrowellen transparent sind und sie nicht reflektrieren oder absorbieren. Generell verwendbar sind daher nur Glas, Keramik, Glaskeramik, Kunststoffe und Papier. Die üblichen Metalltöpfe reflektieren die Mikrowellenenergie und verhindern dadurch das Garen der darin enthaltenen Lebensmittel.

Beim Garen im Mikrowellenofen bleibt die Oberfläche der Speisen unverändert. Zur Erzeugung einer Bräunungskruste werden daher sogenannte Bräunungsgeschirre eingesetzt. Dieses Geschirr aus Glas, Keramik oder Glaskeramik ist vorzugsweise am Boden mit einer speziellen Metallegierung versehen, die die Mikrowellenenergie absorbiert und dadurch im Mikrowellenofen heiß wird. Durch diese zusätzliche Erhitzung werden die Speisen knusprig und braun.

Die bisher verwendeten Metallschichten für Bräunungsgeschirr haben den Nachteil, daß sie immer noch einen beträchtlichen Anteil der Mikrowellenenergie reflektieren und somit nicht in Wärmeenergie umsetzen.

Außerdem ist die Haftung dieser Metallschichten auf dem Geschirr schlecht, da die Wärmeausdehnungskoeffizienten der verwendeten Metalle bzw. Legierungen und der Unterlagen aus Glas, Keramik oder Glaskeramik sehr unterschiedlich sind.

Es war daher Aufgabe der vorliegenden Erfindung, eine Metallschicht bzw. Metallegierungsschicht für Unterlagen aus Glas, Keramik und Glaskeramik zu finden, die die Mikrowellenenergie von Mikrowellenöfen möglichst vollständig absorbiert und deren Wärmeausdehnungskoeffizient dem der Unterlage anpassbar ist.

Diese Aufgabe wird erfindungsgemäß durch die Verwendung von edelmetallhaltigen Pasten aus

a) 50 bis 80 Gew. % eines Gemisches von
aa) 5 bis 70 Gew. % einer elektrisch leitfähigen Komponente aus 5 bis 95 Gew. % Rutheniumoxid, Rest Silber, Palladium, Rhodiumoxid und/oder Wismutoxid,
bb) und 30 bis 95 Gew. % einer Glasfritte
und b) 20 bis 50 Gew. % eines organischen Bindemittels gelöst.

Vorzugsweise verwendet man als elektrisch leitfähige Komponente ein Gemisch aus 5 bis 95 Gew. % Rutheniumoxid und als Rest 0 bis 60 Gew. % Silber, 0 bis 30 Gew. % Palladium oder Silber-Palladium, 0 bis 10 Gew. % Rhodiumoxid und/oder 0 bis 10 Gew. % Wismutoxid. Mit diesen Zusätzen lässt sich der elektrische Widerstand der Schicht und das Absorptionsvermögen für die Mikrowellen einstellen.

Außerdem haben sich für diesen Anwendungszweck besonders Glasfritten bewährt, die folgende Zusammensetzung in Form einer Seegerformel aufweisen:

| | | | | | | | |
|---|---|---|---|---|---|---|---|
| $Li_2O$ | 0,2 | bis | 0,7 | $Cr_2O_3$ | 0 | bis | 0,1 |
| $Na_2O$ | 0 | bis | 0,2 | $B_2O_3$ | 0,5 | bis | 1 |
| $MgO$ | 0 | bis | 0,3 | $SiO_2$ | 1 | bis | 4 |
| $CaO$ | 0 | bis | 0,4 | $TiO_2$ | 0 | bis | 0,2 |
| $ZnO$ | 0,1 | bis | 0,75 | $ZrO_2$ | 0 | bis | 0,2 |
| $BaO$ | 0 | bis | 0,2 | $SnO_2$ | 0 | bis | 0,3 |
| $Al_2O_3$ | 0,1 | bis | 0,7 | $F_2$ | 0 | bis | 0,3 |

Es ist jedoch auch möglich eine bleihaltige Glasfritte mit folgender Seegerformel einzusetzen:

| | | | | | | | |
|---|---|---|---|---|---|---|---|
| $Li_2O$ | 0 | bis | 0,5 | $B_2O_3$ | 0,2 | bis | 0,7 |
| $Na_2O$ | 0 | bis | 0,5 | $SiO_2$ | 1 | bis | 3 |
| $ZnO$ | 0 | bis | 0,1 | $TiO_2$ | 0 | bis | 0,1 |
| $CdO$ | 0 | bis | 0,1 | $ZrO_2$ | 0 | bis | 0,1 |
| $PbO$ | 0,5 | bis | 1 | $F_2$ | 0 | bis | 0,3 |
| $Al_2O_3$ | 0 | bis | 0,3 | | | | |

Die Pasten werden mittels bekannter Techniken, wie Siebdrucke, über Abziehbilder oder mittels Pinsel auf die Unterlage (Geschirr) aufgetragen und auf 700 bis 1300° C erhitzt.

Solche edelmetallhaltigen Pasten sind generell aus der Mikroelektronik bekannt, wo sie zur Herstellung von elektrischen Widerstandsschichten dienen.

Zur Herstellung von Mikrowellen aus Mikrowellenöfen absorbierenden Metallschichten wurden sie bisher nicht eingesetzt.

Die Glasfritten werden so ausgewählt, daß sie mit den Unterlagen aus Gläs, Keramik und Glaskeramik eine optimale Übereinstimmung in bezug auf den Wärmeausdehnungskoeffizienten zwischen 20 und 300 °C aufweisen.

Die organischen Bindemittel dienen dazu, um aus der Glasfritte und den Bestandteilen der elektrisch leitfähigen Komponente eine Paste herzustellen. Bekannte Bindemittel sind beispielsweise Äthylzellulose, sonstige Zellulosederivate, natürliche oder synthetische Harze, gelöst in einem Lösungsmittel.

Die mittels dieser edelmetallhaltigen Pasten hergestellten Metall- bzw. Legierungsschichten zeigen überraschenderweise ein sehr hohes Absorptionsvermögen für die Mikrowellen eines Mikrowellenofens, so daß in relativ kurzer Zeit das so beschichtete Geschirr Temperaturen bis zu 300°C erreicht und zu einer raschen Bräunung der Speisen führt.

Folgende Beispiele sollen die erfindungsgemäße Verwendung edelmetallhaltiger Pasten näher erläutern:

1. 25 Gew. % einer Pulververmischung aus 80 Gew.% $RuO_2$, 15 Gew. % $Bi_2O_3$ und 5 Gew. % $Rh_2O_3$ wurde mit 75 Gew. % einer Glasfritte folgender Zusammensetzung (Seegerformel) innig gemischt:

| | | | |
|------|-------|-----------|-------|
| $Li_2O$ | 0,50 | $Cr_2O_3$ | 0,005 |
| $Na_2O$ | 0,04 | $B_2O_3$ | 0,9 |
| MgO | 0,05 | $SiO_2$ | 2,55 |
| CaO | 0,02 | $TiO_2$ | 0,05 |
| ZnO | 0,40 | $ZrO_2$ | 0,05 |
| BaO | 0,10 | $SnO_2$ | 0,05 |
| $Al_2O_3$ | 0,25 | $F_2$ | 0,2 |

65 Gew.% dieser Mischung wurden mit 35 Gew.% einer Lösung von 3 % Äthylzellulose in Pine Öl angepastet und mittels der bekannten Abziehbildtechnik auf den Boden einer Keramikschüssel aufgebracht. Nach dem Trocknen wurde 12 Stunden auf 750° C erhitzt.

In einem Mikrowellenofen erreicht die so metallisierte Keramikschüssel in 5 Minuten eine Temperatur von 260° C.

2. 20 Gew. % einer Pulvermischung aus 90 Gew. % $RuO_2$ und 10 Gew. % $Bi_2O_3$ wurde mit 80 Gew. % einer Glasfritte folgender Zusammensetzung (Seegerformel) innig gemischt:

| | | | | | |
|------|-------|-----------|-------|-----------|-------|
| $Li_2O$ | 0,50 | CaO | 0,10 | $ZrO_2$ | 0,10 |
| $Na_2O$ | 0,01 | $B_2O_3$ | 0,70 | $TiO_2$ | 0,10 |
| ZnO | 0,60 | $SiO_2$ | 3,50 | $SnO_2$ | 0,25 |
| MgO | 0,10 | $Al_2O_3$ | 0,55 | $F_2$ | 0,20 |
| BaO | 0,01 | | | | |

65 Gew.% dieser Mischung wurden mit 35 Gew.% einer Lösung aus 20 % Methylmethacrylat in Testbenzin angepastet und mit einem Sieb von 77 Maschen /cm in Siebdrucktechnik auf eine Porzellanplatte aufgebracht.

Das Einbrennen erfolgte bei 1250° C während einer Stunde.

In einem Mikrowellenofen erreichte diese Platte innerhalb von 5 Minuten eine Temperatur von 200° C.

3. 25 Gew. % einer Pulvermischung aus 90 Gew.% $RuO_2$ und 10 Gew. % $Bi_2O_3$ wurden mit 75 Gew.% einer Glasfritte folgender Zusammensetzung (Seegerformel) innig gemischt:

| | | | | | |
|------|-------|-----------|-------|-----------|-------|
| $Na_2O$ | 0,05 | PbO | 0,75 | $TiO_2$ | 0,04 |
| $Li_2O$ | 0,30 | $Al_2O_3$ | 0,20 | $ZrO_2$ | 0,09 |
| ZnO | 0,05 | $B_2O_3$ | 0,48 | $F_2$ | 0,20 |
| CdO | 0,07 | $SiO_2$ | 2,00 | | |

EP 0 294 503 B1

Die analog Beispiel 1 hergestellte Paste wird auf eine Porzellanplatte aufgebracht und bei 800° C während 6 Stunden eingebrannt. In einem Mikrowellenofen erreicht diese Platte in 5 Minuten eine Temperatur von 230° C.

4. 25 Gew. % einer Pulvermischung aus 90 Gew. % $RuO_2$, 5 Gew. % $Bi_2O_3$ und 5 Gew. % Silber wurden mit 75 Gew.% einer Glasfritte folgender Zusammensetzung (Seegerformel) gemischt:

| $Li_2O$ | 0,50 | $B_2O_3$ | 0,80 | $ZrO_2$ | 0,07 |
| $Na_2O$ | 0,01 | $SiO_2$ | 3,05 | $TiO_2$ | 0,05 |
| ZnO | 0,41 | $Al_2O_3$ | 0,35 | $SnO_2$ | 0,15 |
| MgO | 0,05 | $Cr_2O_3$ | 0,05 | $F_2$ | 0,20 |
| CaO | 0,05 | | | | |

Mit einer 3 %igen Äthylzelluloselösung wird eine siebdruckfähige Paste hergestellt und auf eine Schüssel aus Glaskeramik aufgebracht. Das Einbrennen erfolgt bei 800° C während 5 Stunden. In einem Mikrowellenofen erreicht die so metallisierte Schüssel eine Temperatur von 280 bis 300° C innerhalb von 5 Minuten.

Die leitfähige Komponente wurde in obigen Beispielen vorzugsweise durch gemeinsame Fällung mit nachfolgender Erhitzung auf 400° C und mechanischer Zerkleinerung hergestellt, die Glasfritte durch Zusammenschmelzen der Komponenten, Abschrecken des Glasflusses und mechanischer Zerkleinerung.

**Patentansprüche**

1. Verwendung einer edelmetallhaltigen Paste aus
a) 50 bis 80 Gew. % eines Gemisches von
aa) 5 bis 70 Gew. % einer leitfähigen Komponente aus 5 bis 95 Gew. % Rutheniumoxid, Rest Silber, Palladium, Rhodiumoxid und/oder Wismutoxid,
und bb) 30 bis 95 Gew. % einer Glasfritte
und b) 20 bis 50 Gew. % eines organischen Bindemittels zur Herstellung von Metall- bzw. Metallegierungsschichten auf Bräunungsgeschirren aus Glas, Keramik oder Glaskeramik für Mikrowellenofen.
2. Verwendung einer Paste gemäß Anspruch 1, wobei die leitfähige Komponente aus 5 bis 95 Gew. % Rutheniumoxid, 0 bis 60 Gew. % Silber, 0 bis 30 Gew. % Palladium und/oder Silber-Palladium, 0 bis 10 Gew. % Rhodiumoxid und/oder 0 bis 10 Gew. % Wismutoxid als Rest besteht.
3. Verwendung einer Paste gemäß Anspruch 1 und 2, mit einer Glasfritte folgender Zusammensetzung (Seegerformel):

| $Li_2O$ | 0,2 | bis | 0,7 | ZnO | 0,1 | bis | 0,75 | $TiO_2$ | 0 | bis | 0,2 |
| $Na_2O$ | 0 | bis | 0,2 | $Al_2O_3$ | 0,1 | bis | 0,7 | $ZrO_2$ | 0 | bis | 0,2 |
| MgO | 0 | bis | 0,3 | $Cr_2O_3$ | 0 | bis | 0,1 | $SnO_2$ | 0 | bis | 0,3 |
| CaO | 0 | bis | 0,4 | $B_2O_3$ | 0,5 | bis | 1 | $F_2$ | 0 | bis | 0,3 |

**Claims**

1. Use of a paste containing noble metals and consisting of
a) 50 to 80 wt.-% of a mixture of
aa) 5 to 70 wt.-% of an electrically conductive component of 5 to 95 wt.-% ruthenium oxide, the remainder being silver, palladium, rhodium oxide and/or bismuth oxide,
and bb) 30 to 95 wt.-% of a glass frit
and b) 20 to 50 wt.-% of an organic binder,
for the production of metal layers or metal alloy layers on browning utensils of glass, ceramic or glass-ceramic for microwave ovens.
2. Use of a paste according to claim 1, wherein the conductive component consists of 5 to 95 wt.-% ruthenium oxide, 0 to 60 wt.-% silver, 0 to 30 wt.-% palladium and/or silver-palladium, 0 to 10 wt.-% rhodium oxide and/or 0 to 10 wt.-% bismuth oxide as the remainder.
3. Use of a paste according to claim 1 and 2, with a glass frit of the following composition (Seeger formula):

4

| | | | | | | | | | | | |
|---|---|---|---|---|---|---|---|---|---|---|---|
| $Li_2O$ | 0.2 | to | 0.7 | ZnO | 0.1 | to | 0.75 | $TiO_2$ | 0 | to | 0.2 |
| $Na_2O$ | 0 | to | 0.2 | $Al_2O_3$ | 0.1 | to | 0.7 | $ZrO_2$ | 0 | to | 0.2 |
| MgO | 0 | to | 0.3 | $Cr_2O_3$ | 0 | to | 0.1 | $SnO_2$ | 0 | to | 0.3 |
| CaO | 0 | to | 0.4 | $B_2O_3$ | 0.5 | to | 1 | $F_2$ | 0 | to | 0.3 |

## Revendications

1. Utilisation d'une pâte comprenant des métaux précieux à partir de
a) 50 à 80% en poids d'un mélange de
aa) 5 à 70% en poids d'un composant conducteur électrique constitué de 5 à 95% en poids d'oxyde de ruthénium, le reste étant de l'argent, du palladium, de l'oxyde de rhodium et/ou du bismuth, et
bb) de 30 à 95% en poids d'une fritte de verre et
b) de 20 à 50% en poids d'un liant organique pour préparer des couches de métal ou d'alliage métallique sur de la vaisselle à brunissement en verre, céramique ou vitrocéramique pour les fours à micro-ondes.

2. Utilisation d'une pâte selon la revendication 1 dans laquelle les composants conducteurs sont composés de 5 à 95% en poids d'oxyde de ruthénium, et le reste de 0 à 60% en poids d'argent, 0 à 30% en poids de palladium, 0 à 10% en poids d'oxyde de rhodium et/ou 0 à 10% en poids d'oxyde de bismuth.

3. Utilisation d'une pâte selon la revendication 1 et 2, avec une fritte de verre de composition suivante (formule de Seeger):

| | | | | | | | | | | | |
|---|---|---|---|---|---|---|---|---|---|---|---|
| $Li_2O$ | 0,2 | à | 0,7 | ZnO | 0,1 | à | 0,75 | $TiO_2$ | 0 | à | 0,2 |
| $Na_2O$ | 0 | à | 0,2 | $Al_2O_3$ | 0,1 | à | 0,7 | $ZrO_2$ | 0 | à | 0,2 |
| MgO | 0 | à | 0,3 | $Cr_2O_3$ | 0 | à | 0,1 | $SnO_2$ | 0 | à | 0,3 |
| CaO | 0 | à | 0,4 | $B_2O_3$ | 0,5 | à | 1 | $F_2$ | 0 | à | 0,3 |

5